# NEW EUROPEAN PATENT SPECIFICATION

(11) **EP 1 093 715 B2**
(45) Date of publication and mention of the opposition decision: **10.06.2009**
(45) Mention of the grant of the patent: 22.12.2004
(21) Application number: 00203607.7
(22) Date of filing: 17.10.2000
(51) Int. Cl.: A01J 25/16

(54) **A board for supporting foodstuffs**
Halteplatte für Lebensmittel
Planche support de produits alimentaires

(30) Priority: 19.10.1999 IT CR990010
(43) Date of publication of application: 25.04.2001
(73) Proprietor: AZ Gomma Ricambi S.R.L., 43010 Bianconese Fontevivo (IT); Agrogest S.r.l., 46037 Roncoferraro, MN (IT)
(72) Inventor: Speziali, Fausto, 46037 Roncoferraro MN (IT)
(74) Representative: Marcio', Paola

(56) References cited:
- EP-A- 0 320 925
- EP-A- 0 419 829
- EP-A- 0 919 358
- WO-A-99/61221
- CH-A- 680 410
- CH-A- 680 973
- DE-A- 1 629 706
- US-A- 5 384 002

## Description

The present invention concerns a board for supporting foodstuffs.

The board according to the present invention forms a level support for foodstuffs in general, wrapped or not fresh or during seasoning, in particular cheese.

Infact, in the dairy farming the boards are a technical help indispensable in the phase of dry salting, discharging, stifling and maturing/seasoning of the cheese. These are very delicate working phases from a hygienic point of view, and the features of the material used in realizing said boards, the surface shape and the realization geometry are essential elements for assuring the complete hygienic property of the equipment for what concerns its capacity of keeping or not dirt, as well as concerning the easy cleaning, the resistance to cleaning and disinfectant agents, to mechanical operations as well as to the sterilization temperatures.

Until now, fir-wood boards have been used in these phases, most of all due to their lightness and cheapness.

Yet such material has some deficiencies from the hygienic point of view.

The natural porosity of its surface favour the penetration of dirt, the nestling of micro-organisms and make the cleaning operations difficult.

Furthermore, it seems to be ever more difficult to find on the market that quality of seasoned wood fitting for the realization of said kind of boards.

This is the reason why lately the use of boards out of materials different from wood is spreading, like e.g. stainless steel or plastic materials, in particular polypropylene.

Stainless steel responds to the hygienic requests as it is easy to clean, it is robust, it resists to mechanic and thermic stress and is long lasting as it does not corrode nor oxidize. Yet the structures prove to be little handy due to the high specific weight of steel, they have a thermic conductivity very different from the one of wood, are rather expensive and favour, with their extremely level surface, a suction effect that makes it very difficult to the worker to remove the cheese.

The boards out of plastic material, in particular out of alimentary polypropylene, have a perfect surface for cleaning, mainly smooth, even if provided with a natural porosity due to the microstructure of the surface that considerably reduces the suction effect.

Furthermore, said equipments are light and handy, are resistant to common disinfectants for alimentary use, may be treated with a steam jet also in automatic washing systems, have an optimal thermic behaviour and are realtively cheap.

But also the boards out of plastic material in common use show some deficiencies.

A plastic board for supporting foodstuffs is known from CH-A-680410. Said board essentially comprise two plates with aeration holes, connected by ribs which form a plurality of aeration channels between the two plates, said channels being open on the lateral surface of the board. Such a board give a good aeration to seasoning cheese, but is difficult to clean because of said holes and channels where dirt, residues, etc. can rest.

According to a more simple embodiment, said board has only one plate adapted to use, having stiffening ribbings on the lower side.

Said ribbings form a hindering to cleaning, in particular in automatic washing systems, and favour the nestling of dirt and germs.

Said boards are obtained with a simple moulding in one single working phase and have small dimensions in length, thus making necessary the use of longitudinal metal rods for joining a plurality of elements for the use of shelvings with many shelves and supporting uprights, which all increase the realization costs.

EP-A-0919358 discloses a board which comprises at least one hollow structured sheet of a kind comprising spaced-apart parallel walls and a plurality of spaced-apart ribs which serve to maintain the spatial relationship between the walls, the spaced-apart ribs and the inner surfaces of the walls defining a plurality of flutes, where the openings are sealed by welding sheet sealing material. The structured sheet are normally made of polypropylene, polyethylene, PVC, or polycarbonate, generally extruded as an integral body, the openings being then sealed by welding to the sheet a portion of a sheet of sealing material.

EP-A-0919358 also discloses some applications, that are a pallet foot, an insulating board, polycarbonate roofing sheets. Such a board, if used as a board for supporting cheese, would be practical to wash and clean, but would still give some "suction effect", even if less than a steel board. Moreover, it would not be able to provide air circulation below the product resting on the board itself.

It is the aim of the present invention to eliminate all mentioned inconveniences.

In particular, it is the aim of the present invention to realize a board out of plastic material for the contact with foodstuffs, having two use surfaces which may be cleaned and washed also in automatic washing systems.

A further aim of the present invention consists in the realization of a perfectly straight, light and robust board out of plastic material, without external ribbings.

The aims set forth are reached by means of a board according to claim 1.

For a better and more practical sealing of the two connecting heads, said connecting heads are obtained by means of two taps to be welded to the board, provided with energy directors that essentially consist of an annular structure projecting from the inwardly turned face of the board, placed near the outline of said taps at such a distance from the edge that the thickness of the energy director is comprised in the thickness of the faces of the board. During the welding phase, said energy director gets melted and thus forms joint material between said prismatic structure and each tap.

A preferred process for the realizing of the board supporting foodstuffs comprises the following phases:
- a continuous extrusion of a tubular prismatic internally hollow structure;
- the cooling of the tubular prismatic structure by plunge into a water solution with emulsifying agent;
- the cutting of the tubular prismatic structure into single boards;
- the welding onto the two terminals of said boards of taps of the same material obtained by injection pressing.

During the extrusion phase, longitudinal ribbings for connection between the upper and lower face of said tubular structure are obtained for stiffening said hollow tubular structure.

During the extrusion phase, the tubular prismatic structure is drawn through a suitable negative draw-plate, for obtaining longitudinal micro-grooves. Another process is described below, which is not part of the invention.

An alternative process for the realization of the board supporting foodstuffs comprises the following phases:
- injection pressing of a hollow box-shaped structure;
- injection pressing of a closing cap for said hollow box-shaped structure;
- welding of said elements for forming a hermetically sealed hollow board.

The box-shaped structure and its cap are provided with ribbings connecting the upper and lower face, for stiffening the board. Another process is described below, which is not part of the invention.

A further realization process of the board supporting foodsuffs comprises an injection pressing phase assisted by gas, of the whole board.

The gas injection for stiffening the hollow structure with ribbings connecting the upper and lower face, takes place by means of a plurality of nozzles provided at least at one head of said board.

By making use of a board of this kind, the following results may be obtained: easy moving, cleaning and washing even in automatic washing systems; cheap realization of the supporting structures; cheap managing of the seasoning phases; full respect of the rules concerning fitness for the contact with foodstuffs.

Hereinbelow an exemplifying and not limiting list is shown of said alimentary rules in the main European Countries and in the United States of America:
AUSTRIA: "K.V.O." N. 775, 23/09/1994. Last updating: BGB1 of 23/07/1998, part. II - 236.
BELGIUM: "Arretè Royal du 25 Aout 1976" (Amended by Arretè Royal 24/07/1992) and last updating: (Arretè Royal 24/11/1997).
DENMARK: "Sundhedsministeriets bekendtgorelse" N. 1064 of 4 December 1996.
FINLAD: "KTM", Paatos 397/94 and following updatings (last updating Decree N. 1071/96).
FRANCE: "Materiaux au contact des aliments et de denrèes destinées a l'alimentation humaine" Brochure N. 1227 edition Janvier 1994 and following updatings. Arretè du 14 Septembre 1992 (lately modified from Arretè 30/09/97).
GERMANY: "BgvV" Recommendation VII upd. 01/06/1998, "BGBl" part 1 of 10/04/1992 and following updatings (last Bundesanzeiger, Jahrgang 49, n. 128).
GREECE: "New Code for Foodstuff and Beverage" 1984, Chapter II, Article 26, and updatings - AX 636/91, 775/91, 676/93.
IRELAND: "Statutory instruments N. 307 del 1991".
ITALY: "Decreto Ministeriale del 21/03/1973" modified by D.M. N. 220 of 26/04/1993 and following updatings (last updating: D.M. N. 338, 22 July 1998).
LUXEMBOURG: "Règlement Grand-Ducal" of 11 June 1991.
NORWAY: "Kongelig resolusjon" of 11 March 1976 and updating 21/12/1993.
PORTUGAL: "Portaria" 1114/95 of 13 September 1995.
NETHERLANDS: "Verpakkingen en Gebruiksartikelenbesluit (Warenwet)": "Regeling" of 21/08/1991 Stort 167 of 29/08/1991 and following supplements (last updating 14/05/1998).
UNITED KINGDOM: "Statutory Instruments, 1992 N. 3145", and following updatings (last updating: "S.I. 1998/N. 1376").
SPAIN: "Resolucion" of 04/11/1982 updated by Real Decree 1042/1997.
SWEDEN: "Food regulation: SLV FS; 1997; 9; 19/03/1997".
SWITZERLAND: "KsV, 26 June 1995" (last updating: "KsV, 30/01/1998").
U.S.A.: "FDA" Part 21 § 177.1520 (a) (3) (i) e (c).
For the contact with ALL kinds of foodstuffs at the conditions of use from A to H Part 21 § 176.170 (c) respectively table 1 and table 2.

The advantages obtained by the realization of the board according to the present invention mainly consist in: the possibility of obtaining light, hollow but resistant boards perfectly sealed against moisture and water during use and washing; the possibility of obtaining stiffening ribbings hidden inside said board; the possibility of realizing boards of different lengths according to the needs.

Further features and advantages of the board according to the present invention will be described more in detail herein below relating to the enclosed drawings, in which some embodiments and realization processes are shown.
Figure 1 shows a perspective view of a board supporting foodstuffs according to the present invention.
Figure 2 shows a front view of a hollow prismatic structure with ribbings, forming the body of said board.
Figures 3 and 4 show a longitudinal section and a front view of a hermetically sealing tap for the terminals of the board, obtained in the structure shown in figure 2.
Figures 5 and 6 show a parallel section to the upper and lower faces of the board, and with the detail enlarged in a hoop, respectively a closing tap and the relative portion of the terminal of the board before and after the welding phase.
Figure 7 shows an exploded perspective view of a board comprising a hollow box-shaped structure and a corresponding closing cap.
Figure 8 shows a perspective view of a board with the points for the injection of the melted polymer and of the inert gas duly shown.
Embodiments of Figs 7 and 8 are not part of the invention covered by claim 1.

Relating to the details shown in the figures, the board according to the present invention supporting foodstuffs, mainly cheese, shown with 1, mainly consists of:
- an upper level face 2;
- a lower level face 3;
- two lateral faces 4 and 5;
- two terminal faces 6 and 7.

Between said upper face 2 and lower face 3, internal ribbings 8 are provided without solution of continuity.

At least one of the upper level face 2 and lower level face 3 is provided - on the outwardly turned side - with micro-grooves, having a depth of less than 1 mm.

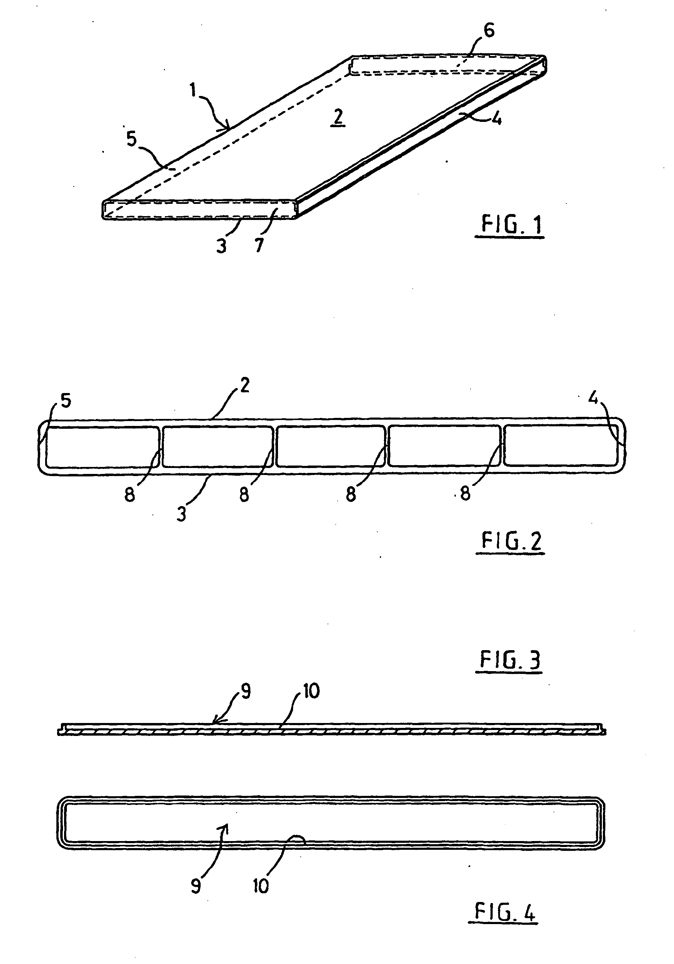

In an embodiment shown in figures 1 to 6, the two terminal faces 6 and 7 of said board 1 are realized by means of taps 9.

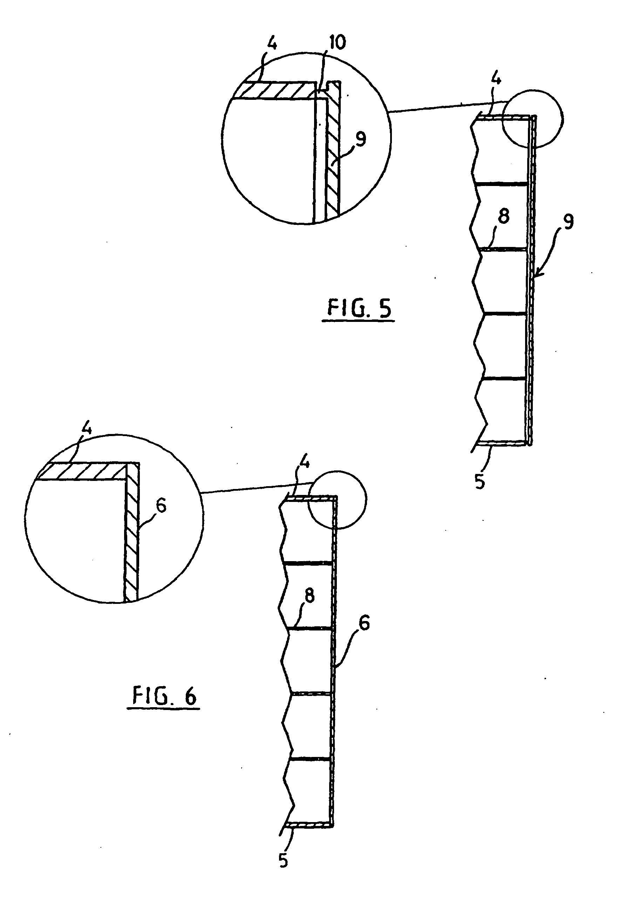

The closing taps 9 contain an energy director 10 consisting of an annular structure projecting from the inwardly turned face of the board, placed near the outline of said tap at such a distance from the edge that the thickness of the energy director is comprised in the thicknes of faces 2, 3, 4 and 5 of the board according to the present invention, as shown in figure 5.

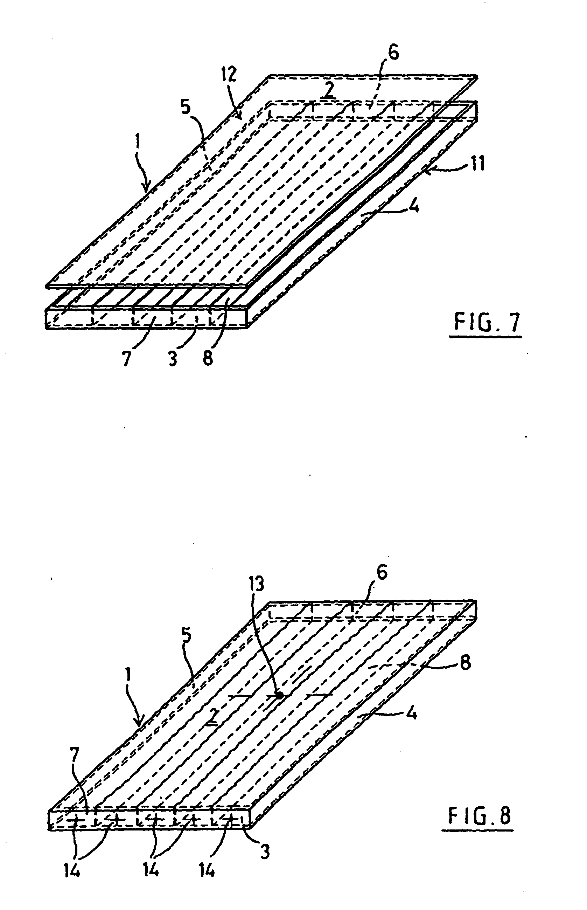

In a variant shown in figure 7, said board 1 consists of a box-shaped structure 11 and a cap 12.

The hollow box-shaped structure advantageously comprises internal stiffening ribbings 8 for conecting, without solution of continuity, the upper face 2 and the lower face 3.

Said cap 12 comprises energy directors projecting from the inwardly turned face of said board and placed near the outline of said cap and in correspondence with said ribbings 8.

FIG. 8 shows a board 1 comprising a single hollow prismatic monolithic structure.

Said hollow prismatic monolithic structure 14 advantageously comprises internal stiffening ribbings 8 which must not be straight, and which connect without solution of contiuity the upper face 2 and the lower face 3.

The plastic material forming all components of the board for supporting foodstuffs according to the present invention has been advantageously chosen between the poliolefines (PO), fitting for the contact with foodstuffs according to the rules of all Countries.

In particular, the monomers used for producing the resin are in section A of CEE 90/128 Directory (updated from 96/11), without any limit in use.

A prefered realization process for the board supporting foodstuffs according to the present invention and shown in figures 1 to 6, mainly comprises the following phases:
- a continuous extrusion of a tubular prismatic internally hollow structure;
- the cooling of the tubular prismatic structure by plunge into a water solution with emulsifying agent;
- the cutting of the tubular prismatic structure into single boards;
- the welding onto the two terminals of said boards of taps of the same material, obtained by injection pressing.

During the extrusion phase, internal longitudinal ribbings 8 are advantageously obtained for connecting, without solution of continuity, the upper faces 2 and the lower faces 3.

During the extrusion phase the tubular prismatic structure is drawn through a suitable negative draw-plate for obtaining longitudinal micro-grooves on the upper faces 2 and/or on the lower faces 3.

The welding phase of said taps 9 is advantageously realized by means of a hot plate, under application of vibration and compression forces between the cut prismatic structure and said taps.

During the welding phase, the energy director 10 gets melted and thus forms joint material between said prismatic structure and each tap. Another process is now described which is not part of the invention.

An alternative realization process for said board 1 supporting foodstuffs, shown in figure 7, mainly comprises the following phases:
- injection pressing of a hollow box-shaped structure 11;
- injection pressing of a closing cap 12 for said hollow box-shaped structure;
- welding of said elements 11 and 12 for forming said board 1.

During the phase of pressing and injection of said hollow box-shaped structure 11, internal ribbings 8 are advantageously realized.

During the pressing phase of said structures 11 and/or 12, micro-grooves are advantageously realized on at least one of the external faces 2 and 3 by means of a suitable shaping of the corresponding surface of the moulds.

The welding phase of said cap 12 to said structure 11 is advantageously realized by means of a hot plate exploiting the melting of said energy directors. Another process is now described which is not part of the invention.

A further realization process of the board supporting foodstuffs and shown in figure 8 mainly consists in the following phase:
- injection pressing assisted by gas.

In this phase, the melted polymer material is introduced inside the mould through a hole corresponding to point 13, while the injection of inert gas takes place through a plurality of nozzles.

Said nozzles, corresponding to points 14 of figure 8, are advantageously placed along a head of said board, so as to obtain inside the same internal ribbings 8 for the connection without solution of continuity between said upper face 2 and said lower face 3.

In an alternative, said nozzles may be arranged on other faces of said board, so as to obtain ribbings that must not be straight, or to obtain a completely hollow board.

During the pressing phase of said board 1, micro-grooves are advantageously obtained on at least one of said external faces 2 or 3 by means of suitable shaping of the corresponding surface of the mould.

According to the present invention, very good results have been obtained for what concerns cheapness, resistance and washing effectiveness with boards having a thickness of 30 mm, a length of 1,500 mm and a width of 320, 360 and 400 mm, with a thickness of the four external faces of 4 mm and with the upper and lower faces connected internally by four longitudinal ribbings with a thickness of 2 mm.

## Claims

1. A board (1) out of plastic material for supporting foodstuff, having an upper level face (2) and a lower level face (3) fitting for the use, a hollow prismatic structure made by extrusion hermetically sealed featuring two lateral faces (4 and 5), two heads (6 and 7) for a connection without solution of continuity between said upper and lower faces (2) and (3), and stiffening ribbings (8) inside said board which connect, without solution of continuity, said upper and lower level faces (2) and (3), ***characterized in that***:
at least one of said upper and lower level faces (2) and (3) comprises micro-grooves adapted to reduce the suction effect and favour the air exchange below the product resting on said board, said microgrooves having a depth of less than 1 mm,
said microgrooves being longitudinally arranged, and said microgrooves being obtained by drawing said prismatic structure through a suitable negative draw-plate during the extrusion phase.

2. A board (1) according to claim 1, **characterized in that** said two heads (6) and (7) are obtained by two closing taps (9) of the same material of the board (1), provided with energy directors (10), each consisting of an annular structure projecting from the inwardly turned face of the board, placed near the outline of said taps (9) at such a distance from the edge that the thickness of the energy director is comprised in the thickness of faces (2,3,4 and 5) of said board, said energy directors (10) being adapted to melt during the welding of the taps (9) to the prismatic, structure, thus forming joint material between said prismatic structure and said taps.

## Patentansprüche

1. Platte (1) aus Kunststoff zur Ablage von Lebensmittelprodukten, die eine Oberseite (2) und eine Unterseite (3) hat, die für den Einsatz geeignet sind, eine prismatische Hohlstruktur, die hermetisch abgeschlossen ist und zwei Seitenflächen (4 und 5) sowie zwei Stirnflächen (6 und 7) aufweist, welche eine durchgehende Verbindung zwischen der Oberseite (2) und der Unterseite (3) herstellen, sowie Versteifungsrippen (8), die ohne Unterbrechung die Oberseite (2) und die Unterseite (3) verbinden, **dadurch gekennzeichnet, dass**:
zur Reduzierung des Saugeffektes und zur Begünstigung von Luftaustausch unterhalb des auf der Platte (1) liegenden Lebensmittelprodukten Mikrorillen auf wenigstens einer der genannten Ober- und Unterseiten der Platte ausgebildet sind, wobei genante Mikrorillen eine Tiefe von weniger als 1 mm haben, in Längsrichtung angeordnet sind und durch Ziehen der genannten prismatischen Struktur durch ein passendes negatives Zieheisen während der Extrusionsphase erhalten werden.

2. Platte (1) nach Anspruch 1, **dadurch gekennzeichnet, dass** die beiden Stirnflächen (6 und 7) durch zwei Verschlussdeckel (9) aus demselben Material wie die Platte (1) gebildet sind, wobei sie Kraftleiter (10) aufweisen, die aus einer ringförmigen Struktur bestehen, welche von der Seite abstehen, die in das Innere der Platte weist, und in einem solchen Abstand in der Nähe des Aussenumfangs des genannten Verschlussdeckels (9) von dessen Kante angeordnet sind, dass die Dicke des Kraftleiters (10) innerhalb der Dicke der Seiten (2, 3, 4, 5) der Platte liegt, wobei die Kraftleiter (10) während des Verschweißens der Verschlussdeckel (9) mit der prismatischen Struktur verschmelzen und **dadurch** ein Verbindungsmaterial zwischen der prismatischen Struktur und den genannten Verschlussdeckeln bilden.

## Revendications

1. Une planche (1) de matière plastique pour porter des aliments, ayant une surface supérieure (2) et une surface inférieure (3) adaptées à l'emploi, une structure prismatique creuse faite par extrusion scellée hermétiquement possédant deux faces latérales (4 et 5), deux têtes (6 et 7) pour une connexion sans discontinuité entre les dites surfaces supérieure et inférieure (2) et (3), et des côtes de raidissement (8) à l'intérieur de la dite planche, qui raccordent, sans discontinuité, la dite surface supérieure (2) et la dite surface inférieure (3), **caractérisées par le fait que** :
au moins une des dites surfaces supérieure et inférieure (2) et (3) comprend des micro cannelures adaptées à réduire l'effet de succion, et favorisent l'échange d'air sous le produit déposé sur la planche, les dites micro cannelures ayant une profondeur de moins d'1 mm, les dites micro cannelures étant disposées longitudinalement, et les dites micro cannelures étant obtenues en tirant la dite structure prismatique à travers un porte-filière négatif adéquat durant la phase d'extrusion.

2. Une planche (1) selon la revendication 1, **caractérisée par le fait que** les dites deux têtes (6) et (7) sont obtenues par deux tarauds de fermeture (9) de la même matière que la planche (1) équipés de directeurs d'énergie (10), chacun constitué d'une structure annulaire sortant de la face tournée vers l'intérieur de la planche, placée près du cantour des dits tarauds (9) à une distance du bord telle que l'épaisseur du directeur d'énergie soit comprise dans l'épaisseur des surfaces (2, 3, 4 et 5) de la dite planche, les dits directeurs d'énergie (10) étant prévus pour se fondre durant la soudure des tarauds (9) à la structure prismatique, formant ainsi une matière de joint entre la dite structure prismatique et les dits tarauds.
